# EUROPÄISCHE PATENTSCHRIFT

(11) **EP 2 442 637 B1**
(45) Veröffentlichungstag und Bekanntmachung des Hinweises auf die Patenterteilung: **07.06.2017**
(21) Anmeldenummer: 10722937.9
(22) Anmeldetag: 12.05.2010
(51) Int. Cl.: A01K 7/02

(54) **TRÄNKEVORRICHTUNG FÜR NUTZTIERE**
WATERING DEVICE FOR LIVESTOCK
DISPOSITIF D'ABREUVEMENT POUR ANIMAUX D'ÉLEVAGE

(30) Priorität: 20.06.2009 DE 102009025729
(43) Veröffentlichungstag der Anmeldung: 25.04.2012
(73) Patentinhaber: Suevia Haiges GmbH, 74366 Kirchheim/Neckar (DE)
(72) Erfinder: HAIGES, Frank, 74366 Kirchheim/Neckar (DE)
(74) Vertreter: Bartels, Martin Erich Arthur
(86) Internationale Anmeldenummer: PCT/EP2010/002946
(87) Internationale Veröffentlichungsnummer: WO 2010/145738

(56) Entgegenhaltungen:
- WO-A1-2005/082131
- DE-U1- 20 004 073
- DE-U1- 29 920 680
- US-A- 2 613 311
- US-B1- 6 536 458

## Beschreibung

Die Erfindung betrifft eine Tränkevorrichtung für Nutztiere, mit mindestens einer Tränkeschale, einer zugeordneten Wasserversorgungseinrichtung und einer Heizvorrichtung zum Verhindern des Gefrierens von in der Tränkeschale befindlichem Wasser, wobei die Heizvorrichtung zumindest eine Heizplatte aufweist, die für den Wärmeübergang zu einer Übertragungsfläche an der Tränkeschale eine Heizfläche bildet.

Es ist Stand der Technik, Tränkevorrichtungen, die beispielsweise in entsprechenden Klimazonen im Freien aufgestellt sind oder sich in Stallungen befinden, die keinen ausreichenden Schutz gegen winterliche Witterungseinflüsse bieten, mit Heizvorrichtungen auszurüsten. Beispielsweise zeigt das Dokument DE 200 04 073 U1 eine Vorrichtung, bei der eine durch ein Heizkabel gebildete Heizvorrichtung vorgesehen ist. Um einen ausreichenden Wärmeübergang zu erzielen, sind bei der bekannten Lösung in den Boden der Tränkeschale außenseitig vertiefte, das Heizkabel aufnehmende Nuten eingearbeitet, die einen mäanderförmigen Verlauf besitzen, um eine ausreichende Kontaktierung für den Wärmeübergang zu gewährleisten. Eine solche Bauweise resultiert in verhältnismäßig hohen Herstellungskosten und führt zu einem großen Montageaufwand.

Aus WO 2005/082131 A1 ist eine Tränkevorrichtung der eingangs genannten Art mit einer Tränkeschale und einer an deren Unterseite angebrachten Heizvorrichtung zur Erwärmung von Trinkwasser in der Tränkeschale bekannt. Die Heizvorrichtung bzw. deren Heizkörper liegt von unten am Schalenboden der Tränkeschale an und wird durch ein genopptes oder gewelltes Verbundmaterial an den Schalenboden gedrückt. An der Unterseite des Heizkörpers ist dieser gemeinsam mit dem Verbundmaterial in einem Deckel untergebracht, der an der Unterseite der Tränkeschale lösbar angebracht ist. Weiterer Stand der Technik ist aus die Dokumente DE29920680U, US2613311 A und US6536458B bekannt.

Im Hinblick auf diesen Stand der Technik stellt sich die Erfindung die Aufgabe, eine Tränkevorrichtung zur Verfügung zu stellen, die demgegenüber einfacher und billiger herstellbar ist, nichts desto weniger sich jedoch durch eine effektive Heizwirkung auszeichnet.

Diese Aufgabe ist durch eine Tränkevorrichtung gelöst, die die Merkmale des Patentanspruches 1 in seiner Gesamtheit aufweist.

Gemäß dem kennzeichnenden Teil des Patentanspruchs 1 ist die Übertragungsfläche durch eine am Wasserzulaufbereich der Tränkeventilanordnung angebrachte Trägerplatte gebildet, die vom Wasserzulaufbereich derart abgewinkelt ist, dass sie sich entlang der Wand eines Trägerteiles der Tränkeschale erstreckt und in das Wasser in der Tränkeschale eintaucht.

Eine wesentliche Besonderheit der Erfindung besteht darin, dass die Heizvorrichtung eine Heizplatte aufweist, die eine Heizfläche bildet, die den Wärmeübergang zu einer Übertragungsfläche an der Tränkeschale bewirkt. Gegenüber einer thermischen Kontaktierung durch ein Heizkabel, das bei der erwähnten, bekannten Lösung an der Unterseite der Tränkeschale in Nuten geführt ist, wird zum einen ein besserer Wärmeübergang durch den großflächigen Wärmeaustausch zwischen Heizfläche und Übertragungsfläche erreicht. Als weiterer Vorteil resultiert eine wesentlich vereinfachte Bauweise, weil die beim Stand der Technik erforderlichen Maßnahmen für die Verlegung des Heizkabels nicht erforderlich sind, wie in den Boden der Tränkeschale eingearbeitete Nuten. Im Gegensatz zu der bekannten Lösung können daher existierende Tränkevorrichtungen nachträglich bei Bedarf mit einer Heizvorrichtung nachgerüstet werden, ohne dass bauliche Abänderungen der Tränkeschale an sich erforderlich wären.

Bei vorteilhaften Ausführungsbeispielen weist die Heizvorrichtung eine flexible Heizplatte auf, deren Heizfläche der Kontur der am Wärmeübergang beteiligten Übertragungsfläche anpassbar ist. Auf besonders einfache Weise ist dadurch eine besonders gute Heizwirkung erzielbar.

Mit besonderem Vorteil kann die Anordnung so getroffen sein, dass die Heizplatte in Form einer Silikon-Heizplatte an einen gewölbten Außenwandteil des Wasserzulaufbereiches der Tränkeventilvorrichtung angepasst ist. Dadurch, dass hierbei eine sehr flexible Heizplatte, die sich an gewölbte Wandteile anschmiegt, benutzt wird, lässt sich nicht nur das Tränkeventil bei besonders verlustarmem Betrieb auch bei sehr niedrigen Temperaturen, beispielsweise bis minus 25° Celsius, mit Sicherheit frostfrei halten, sondern der Wärmeübergang erfolgt auch auf das Zulaufrohr selbst.

Wenn die Heizplatte am Boden der Tränkeschale durch eine Halterung festgelegt ist, die eine Lage aus wärmeisolierendem Material aufweist, die die vom Boden der Tränkeschale abgewandte Rückseite der Heizplatte überdeckt, wird nicht nur eine besonders gute Heizwirkung erreicht, sondern die Vorrichtung arbeitet auch besonders verlustarm.

Vorzugsweise ist eine ebene Heizplatte entlang einer ebenen Bodenfläche der Tränkeschale angeordnet.

Für eine elektrisch beheizbare Heizplatte kann die Anordnung so getroffen sein, dass eine Versorgungsleitung zur Zufuhr elektrischer Energie an demjenigen Seitenrandbereich der Tränkeschale gelegen ist, mit dem ein Zulaufrohr der Wasserversorgungsleitung verbunden ist. Bei so gestalteter elektrischer Energiezufuhr eröffnet sich die Möglichkeit, auf baulich einfache Weise eine Zusatz-Beheizung des Zulaufrohres zu verwirklichen, indem an der Versorgungsleitung ein Leitungsabzweig zur Versorgung eines Zusatz-Heizelementes vorgesehen ist, das das Zulaufrohr beheizt.

In besonders vorteilhafter Weise kann diesbezüglich die Anordnung so getroffen sein, dass das Zusatz-Heizelement durch eine in Windungen das Zulaufrohr umgebende Heizleitung gebildet ist.

Nachstehend ist die Erfindung anhand von in der Zeichnung dargestellten Ausführungsbeispielen im Einzelnen erläutert. Es zeigen:
- Fig. 1: eine perspektivische Schrägansicht eines Ausführungsbeispieles der Tränkevorrichtung;
- Fig. 2: eine Seitenansicht des Ausführungsbeispieles von Fig. 1;
- Fig. 3: eine perspektivische Schrägansicht des Ausführungsbeispieles mit auseinandergezogen dargestellten Bauelementen;
- Fig. 4: eine gegenüber Fig. 1 bis 3 vergrößert gezeichnete Draufsicht lediglich der Wirkelemente der Heizvorrichtung des Ausführungsbeispieles;
- Fig. 5: eine perspektivische und stark schematisch vereinfachte Schrägansicht eines weiteren Ausführungsbeispieles, ohne Abdeckung der Tränkventilanordnung dargestellt;
- Fig. 6: eine gegenüber Fig. 5 größer gezeichnete Teilschnittdarstellung lediglich des Wasserzulaufbereiches der Tränkeventilanordnung des Ausführungsbeispieles von Fig. 5;
- Fig. 7: eine gegenüber einer praktischen Ausführungsform in halber Größe gezeichnete Vorderansicht einer Silikon-Heizplatte des Ausführungsbeispieles von Fig. 5 bis 7;
- Fig. 8: eine der Fig. 6 ähnliche Teilschnittdarstellung des Wasserzulaufbereiches der Tränkeventilanordnung eines gegenüber dem Beispiel von Fig. 5 bis 7 geringfügig abgewandelten Ausführungsbeispieles;
- Fig. 9: eine der Fig. 3 ähnliche perspektivische Schrägansicht eines erfindungsgemäßen Ausführungsbeispieles der Tränkevorrichtung und
- Fig. 10: einen schematisch vereinfacht und abgebrochen dargestellten Teilausschnitt des Wasserzulaufbereiches des Ausführungsbeispieles von Fig. 9.

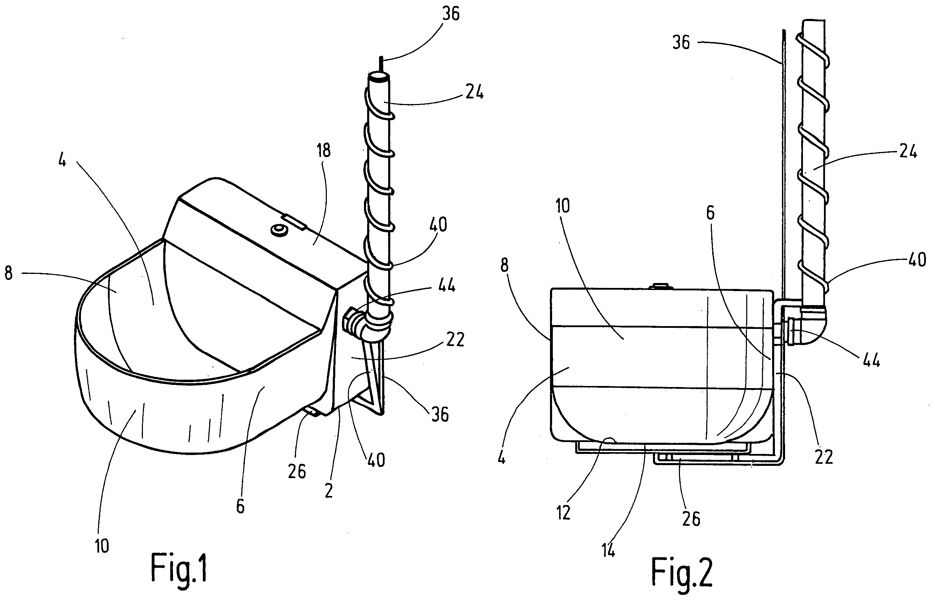

Die Fig. 1 bis 4 und zugehörige Beschreibung dienen ausschließlich der Erläuterung und sind nicht Gegenstand der anspruchsgemäßen Lösung.

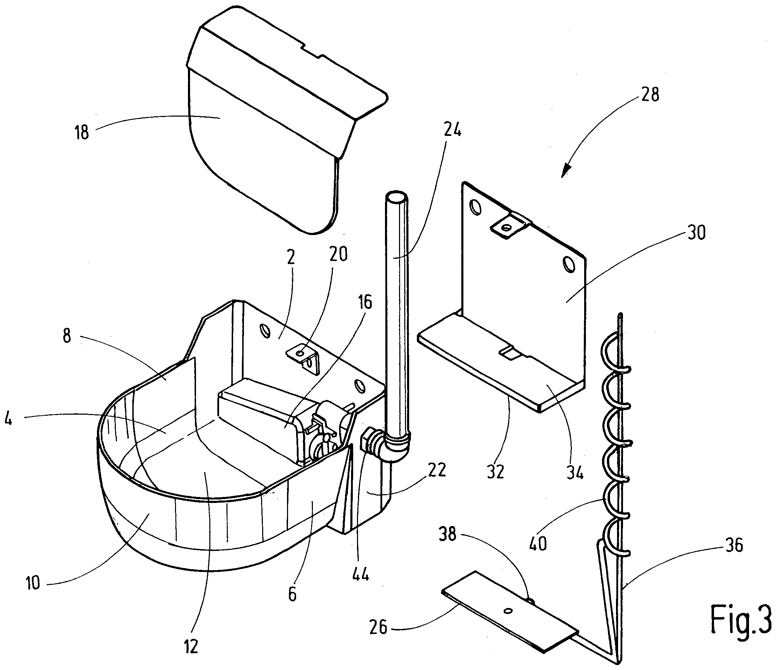

Anhand der Fig. 1 bis 4 ist die Erfindung am Beispiel einer sogenannten Kunststoff-Tränkevorrichtung vom Schwimmertyp erläutert, bei der ein einstückiges Kunststoffspritzgußteil ein Befestigungs- oder Trägerteil 2 und eine daran sich anschließende Tränkeschale 4 bildet. Diese hat, wie am besten aus Fig. 1 und 2 zu ersehen ist, zwei zueinander parallele, ebenflächige Seitenwände 6 und 8, die durch eine kreisbogenförmig gewölbte Stirnwand 10 verbunden sind. Der Boden 12 der Tränkeschale 4 bildet in seinem Zentralbereich eine zu den Wänden 6, 8 und 10 senkrechte, ebene Bodenfläche 14. Im Innenraum der Tränkeschale 4 befindet sich, siehe Fig. 3, eine in an sich bekannter Weise ausgebildete Tränkeventilanordnung 16, die an der Innenseite des Befestigungsteiles 2 gelegen ist und von einer schwenkbeweglichen Abdeckhaube 18 übergriffen ist, die am Befestigungsteil 2 an einem Halter 20 derart schwenkbeweglich angebracht ist, dass die Abdeckung 18 von einem zu tränkenden Tier nach innen geschwenkt werden kann und an einem (nicht dargestellten) Betätigungsteil der Tränkeventilanordnung 16 derart anstößt, dass ein Zufluss von Wasser in die Tränkeschale 4 freigegeben ist.

Für die Zufuhr von Wasser zur Tränkeventilanordnung 16 ist ein Zulaufrohr 24 durch den Seitenwandbereich 22 hindurch nach innen geführt.

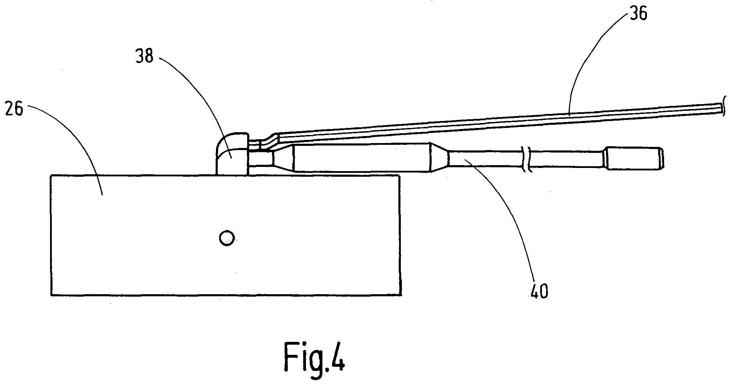

Hauptbestandteil der Heizvorrichtung ist eine elektrisch beheizbare Heizplatte 26, die, wie am besten aus Fig. 3 und 4 zu ersehen ist, bei dem hier gezeigten Beispiel die Form einer flachen, ebenen, flexiblen rechteckförmigen Platte besitzt. Diese ist so angebracht, dass der Wärmeübergang großflächig zur Bodenfläche 14 der Tränkeschale 4 erfolgt. Zu diesem Zweck ist eine Halterung in Form eines Winkelprofils 28 (siehe Fig. 3) vorgesehen, das am Halter 20 am Befestigungsteil 2 festgelegt ist, wo auch die Abdeckung 18 der Tränkeventilanordnung 16 beweglich angebracht ist. Der erste Schenkel 30 des Winkelprofils 28 erstreckt sich entlang der Rückseite des Befestigungsteiles 2, während der zweite Schenkel 32 den Träger für die Heizplatte 26 bildet. Diese liegt jedoch nicht unmittelbar am Schenkel 32 an, sondern auf diesem befindet sich eine Lage 34 (Fig. 3) aus einem Isolierstoff.

Die Energieversorung der Heizplatte 26 erfolgt über eine Versorgungsleitung 36 von einem nicht gezeigten Transformator her. Die Versorgungsleitung 36 ist mit der Heizplatte 26 an einer Anschlussstelle 38 verbunden, die einen Leitungsabzweig bildet, an dem eine Heizleitung 40 angeschlossen ist. Wie am deutlichsten aus Fig. 1 zu ersehen ist, erstrecken sich Versorgungsleitung 36 und Heizleitung 40 entlang des am Halter 2 befindlichen Seitenwandbereiches 22 und entlang des am Anschluss 44 angebrachten Wasser-Zulaufrohres 24, wobei die Heizleitung 40 in Windungen um das Zulaufrohr 24 gewunden ist, wobei die Länge der Heizleitung 40 etwa zwei Meter betragen kann, bei einer Heizleistung, die beispielsweise 10W/m beträgt. Bei der Heizplatte 26 selbst kann beispielsweise eine Heizleistung von 30W vorgesehen sein.

Die Leistungsregelung kann in üblicher Weise mittels einer Thermostateinrichtung erfolgen, wobei in der Heizplatte 26 Heizleiter gewöhnlicher Art eingebettet sein können, beispielsweise in der Weise, dass die Heizplatte 26 einen flexiblen Kunststoffkörper bildet. Während beim gezeigten Beispiel die Heizplatte 26 als flaches, ebenes Bauelement entlang einer ebenen Bodenfläche 14 angeordnet ist, ermöglicht eine flexible Bauweise der Heizplatte 26, dass diese an nicht ebene Wandflächenbereiche der Tränkeschale 4 angeschmiegt werden könnte. Anstelle einer thermostatischen Lei-stungsregelung können in der Heizplatte 26 PTC-Widerstandselemente vorgesehen sein, die eine Selbstregelung bewirken, so dass die Heiztemperatur auf einen mit dem Kunststoffwerkstoff von Tränkeschale 4 und/oder Heizplatte 26 verträglichen Temperaturbereich von etwa 40 Grad selbsttätig eingestellt wird. Die an der Anschlussstelle 38 angeschlossene Heizleitung 40 kann mit der Heizplatte 26 elektrisch in Reihe geschaltet sein, so dass sie Bestandteil des Leistungsregelkreises ist.

Anstelle einer zusammen mit dem Befestigungsteil 2 einstückig aus Kunststoff gebildeten Tränkeschale 4 könnten beliebige andere Werkstoffe, beispielsweise Keramik oder Metall, vorgesehen sein. Die erfindungsgemäße Gestaltung der Heizvorrichtung ermöglicht, ohne Abänderung vorhandener Tränkevorrichtungen, eine Nachrüstung durch Anbringen einer flächigen Heizplatte an einer entsprechenden Wandfläche, auch in Kombination mit einer Heizleitung, die in Windungen ein Wasser-Zulaufrohr umgibt, ungeachtet dessen, an welchem Bereich des betreffenden Befestigungsteiles der Tränkeschale 4 das Zulaufrohr vorgesehen ist.

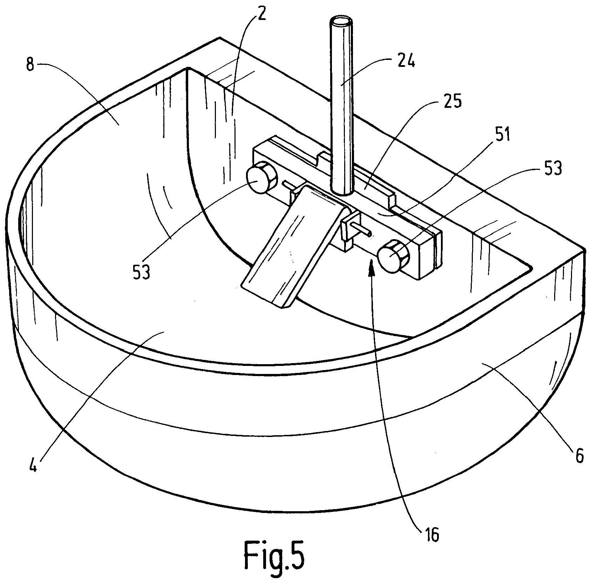

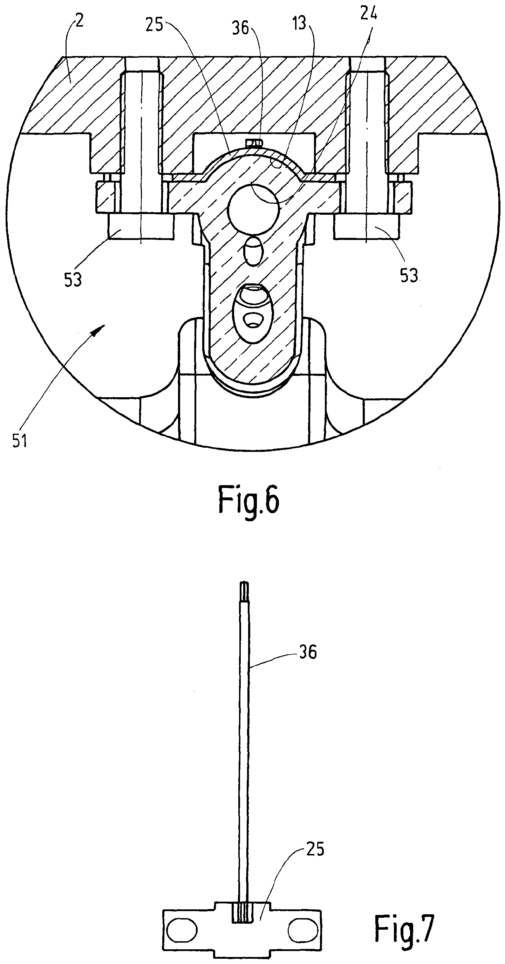

Die Fig. 5 bis 7 zeigen eine Ausführungsform, die sich insbesondere für Tränkeschalen aus einem Werkstoff eignet, der aus einem Material verhältnismäßig geringer Wärmeleitfähigkeit besteht, also beispielsweise Keramik oder Kunststoff. Um bei einfacher Bauweise eine effektive Heizwirkung zu erzielen weist die Heizvorrichtung eine flexible Heizplatte 25 in Form einer sogenannten Silikon-Heizplatte auf, wie sie in Fig. 7 gesondert dargestellt ist und beispielsweise für eine Versorgungsspannung von 24 Volt handelsüblich ist. Während sich beim Ausführungsbeispiel von Fig. 1 bis 4 die Heizplatte 26 im Wesentlichen ebenflächig an der Außenseite des Bodens 12 der Tränkeschale 4 befindet, ist beim zweiten Ausführungsbeispiel von Fig. 5 bis 7 die Heizplatte 25 unmittelbar der Tränkeventilanordnung 16 zugeordnet, genauer gesagt, am Wasserzulaufbereich 51, an dem das Zulaufrohr 24 in die Ventilanordnung 16 einmündet. Wie am Deutlichsten aus Fig. 6 zu ersehen ist, bildet der Wasserzulaufbereich 51 einen metallischen, mit dem eigentlichen Ventil (das nicht eigens dargestellt ist) einheitlichen Körper, wobei das Endteil des Zulaufrohres 24 mit gewölbtem Außenwandteil die Übertragungsfläche 13 bildet. Wie Fig. 6 zeigt, ist die Silikon-Heizplatte 25 von Fig. 7, in an die Außenkontur des Wasserzulaufbereiches 51 angeschmiegter Position, zusammen mit dem Wasserzulaufbereich 51 mittels Halteschrauben 53 an dem die hintere Wand der Tränkeschale 4 bildenden Befestigungsteil 2 festgelegt. Die Heizplatte 25 liegt somit vollflächig an dem den Wasserzulaufbereich 51 bildenden Metallkörper im Bereich zwischen diesem und dem Befestigungsteil 2 an. Es ergibt sich dadurch eine besonders effektive Beheizung sowohl der Tränkeventilanordnung 16 selbst als auch des damit metallisch in Verbindung stehenden Zulaufrohres 24, wobei durch die eng benachbarte Lagebeziehung zu dem die hintere Wand der Tränkeschale 4 bildenden Befestigungsteil 2 auch Wärme an den Innenraum der Tränkeschale 4 weitergegeben wird.

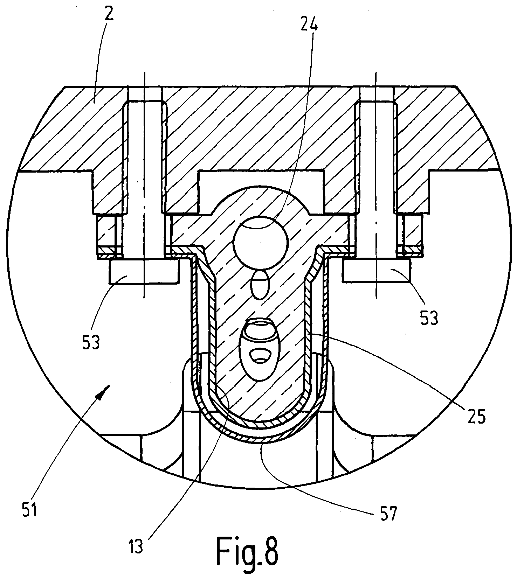

Die Fig. 8 zeigt in ähnlicher Weise wie Fig. 6 den Wasserzulaufbereich 51 entsprechend einem weiter abgewandelten Beispiel. Dieses unterscheidet sich vom zuvor beschriebenen Beispiel lediglich dadurch, dass die Silikon-Heizplatte 25, verglichen mit der Darstellung von Fig. 7, eine größere Länge zwischen den Befestigungslöchern besitzt und dass die Heizplatte 25 nicht, wie in Fig. 6 gezeigt, an den hinteren gewölbten Endbereich des Wasserzulaufrohres 24 angepasst ist. Stattdessen ist der Heizplatte 25 an den vom Befestigungsteil 2 abgekehrten vorderen Außenwandbereich des metallischen Anschlusskörpers des Wasserzulaufbereiches 51 angepasst, sodass dieser vordere Außenwandbereich die Übertragungsfläche 13 bildet. Entsprechend der gegenüber Fig. 6 exponierten Lage der Heizplatte 25 ist eine Schutzabdeckung 57, die die Heizplatte 25 in einem geringen Abstand umgibt, zusammen mit dieser und dem Wasserzulaufbereich 51 mit dem die Rückwand der Tränkeschale 4 bildenden Befestigungsteil 2 verschraubt.

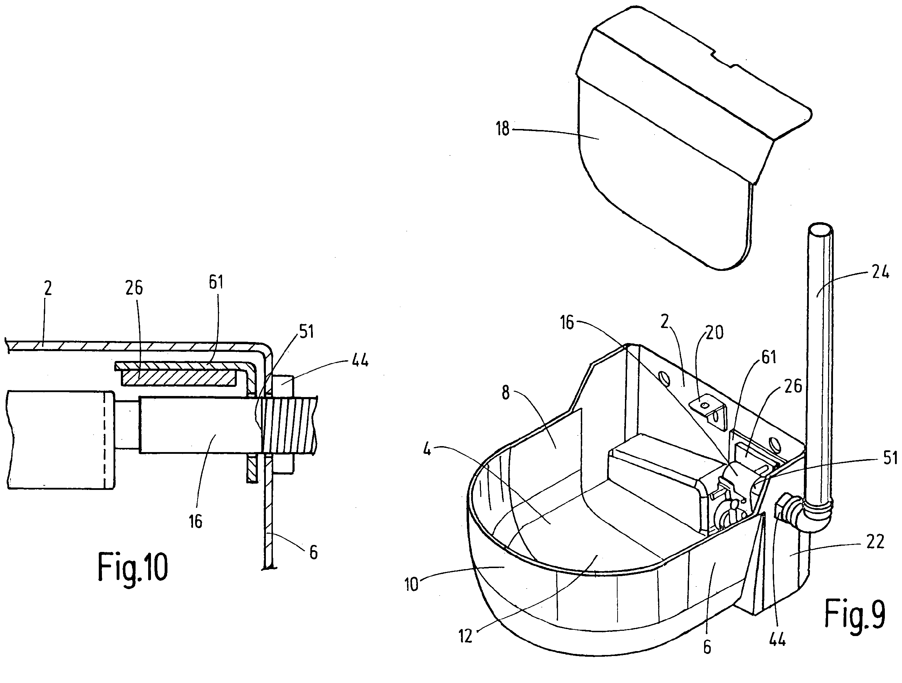

Bei dem erfindungsgemäßen Ausführungsbeispiel gemäß Fig. 9 und 10 findet wiederum eine Heizplatte 26 Verwendung, wie sie beim Ausführungsbeispiel gemäß Fig. 1 bis 3 benutzt wird und in Fig. 4 gesondert dargestellt ist. Wie am Deutlichsten aus Fig. 10 zu ersehen ist, ist die Wärme-Übertragungsfläche durch eine metallische Trägerplatte 61 gebildet, die sich vom Wasserzulaufbereich 51 ausgehend entlang der Tränkeventilanordnung 16 und entlang des die Rückwand der Tränkeschale 4 bildenden Befestigungsteiles 2 erstreckt, wobei die Heizplatte 26 an der Trägerplatte 61 so angeordnet ist, dass sich die Heizplatte 26 in geringem Abstand von der Tränkeventilanordnung 16 erstreckt und die Trägerplatte 61 selbst in geringem Abstand vom Befestigungsteil 2 verläuft. Bei diesem Ausführungsbeispiel ist die Heizplatte 26 vorzugsweise so positioniert, dass sie in das Wasser eintauchen kann, während ein (nicht dargestellter) Thermostat oberhalb des Wasserspiegels gelegen ist. Auch bei diesem Ausführungsbeispiel kann sowohl die Tränkeventilanordnung 16 als auch, durch Wärmeübertragung über den metallischen Wasserzulaufbereich 51, das Zulaufrohr 24 frostfrei gehalten werden, sodass ein Verzicht auf eine Zusatzbeheizung des Zulaufrohres 24, wie sie in Fig. 1 bis 3 durch die Heizleitung 40 gezeigt ist, möglich ist.

## Patentansprüche

1. Tränkevorrichtung für Nutztiere, mit mindestens einer Tränkeschale (4), einer zugeordneten Wasserversorgungseinrichtung (16, 24) und einer Heizvorrichtung (25, 26) zum Verhindern des Gefrierens von in der Tränkeschale (4) befindlichem Wasser, wobei die Heizvorrichtung zumindest eine Heizplatte (25, 26) aufweist, die für den Wärmeübergang zu einer Übertragungsfläche (13, 14, 61) an der Tränkeschale (4) eine Heizfläche bildet, **dadurch gekennzeichnet, dass** die Übertragungsfläche durch eine am Wasserzulaufbereich (51) der Tränkeventilanordnung (16) angebrachte Trägerplatte (61) gebildet ist, die vom Wasserzulaufbereich (51) derart abgewinkelt ist, dass sie sich entlang der Wand eines Trägerteiles (2) der Tränkeschale (4) erstreckt und in das Wasser in der Tränkeschale (4) eintaucht.

2. Tränkevorrichtung nach Anspruch 1, **dadurch gekennzeichnet, dass** die Heizvorrichtung eine flexible Heizplatte (25, 26) aufweist, deren Heizfläche der Kontur der am Wärmeübergang befindlichen Übertragungsfläche (13, 14, 61) anpassbar ist.

3. Tränkevorrichtung nach Anspruch 2, **dadurch gekennzeichnet, dass** die Heizplatte in Form einer Silikon-Heizplatte (25) an einen gewölbten Außenwandteil des Wasserzulaufbereiches (51) der Tränkeventilanordnung (16) angepasst ist.

4. Tränkevorrichtung nach Anspruch 3, **dadurch gekennzeichnet, dass** die Heizplatte (25) an den gewölbten Außenwandteil des an den Wasserzulaufbereich (51) angrenzenden Endes des Zulaufrohres (24) angepasst ist.

5. Tränkevorrichtung nach Anspruch 1 oder 2, **dadurch gekennzeichnet, dass** die Heizplatte (26) am Boden (12) der Tränkeschale (4) durch eine Halterung (28) festgelegt ist, die eine Lage (34) aus wärmeisolierendem Material aufweist, die die vom Boden (12) der Tränkeschale (4) abgewandte Rückseite der Heizplatte (26) überdeckt.

6. Tränkevorrichtung nach Anspruch 5, **dadurch gekennzeichnet, dass** eine ebene Heizplatte (26) entlang einer ebenen Bodenfläche (14) der Tränkeschale (4) angeordnet ist.

7. Tränkevorrichtung nach einem der Ansprüche 1 bis 6, **dadurch gekennzeichnet, dass** eine elektrische beheizbare Heizplatte (25, 26) vorgesehen ist.

8. Tränkevorrichtung nach Anspruch 7., **dadurch gekennzeichnet, dass** eine Versorgungsleitung (36) zur Zufuhr elektrischer Energie zur Heizplatte (25, 26) an demjenigen Wandbereich (2, 22) der Tränkeschale (4) gelegen ist, mit dem ein Zulaufrohr (24) der Wasserversorgungseinrichtung verbunden ist.

9. Tränkevorrichtung nach Anspruch 8., **dadurch gekennzeichnet, dass** an der Versorgungsleitung (36) ein Leitungsabzweig (38) zur Versorgung eines Zusatz-Heizelementes (40) zur Beheizung des Zulaufrohres (24) vorgesehen ist.

10. Tränkevorrichtung nach Anspruch 9., **dadurch gekennzeichnet, dass** das Zusatz-Heizelement durch eine in Windungen das Zulaufrohr (24) umgebende Heizleitung (40) gebildet ist.

## Claims

1. A watering device for livestock, comprising at least one watering shell (4), an assigned water supply device (16, 24) and a heating device (25, 26) for preventing water located in the watering shell (4) from freezing, the heating device having at least one heating plate (25, 26) which forms a heating surface for transferring heat to a transmission surface (13, 14, 61) on the watering shell (4), **characterised in that** the transmission surface is formed by a support plate (61) attached to the water inlet region (51) of the watering valve arrangement (16), which support plate is at an angle to the water inlet region (51) such that it extends along the wall of a support part (2) of the watering shell (4) and is immersed in the water within the watering shell (4).

2. The watering device according to Claim 1, **characterised in that** the heating device has a flexible heating plate (25, 26) the heating surface of which can be matched to the contour of the transmission surface (13, 14, 61) located at the heat transfer point.

3. The watering device according to Claim 2, **characterised in that** the heating plate in the form of a silicon heating plate (25) is matched to a curved outer wall section of the water inlet region (51) of the watering valve arrangement (16).

4. The watering device according to Claim 3, **characterised in that** the heating plate (25) is matched to the curved outer wall section of the end of the inlet pipe (24) adjoining the water inlet region (51).

5. The watering device according to Claim 1 or 2, **characterised in that** the heating plate (26) is fixed to the bottom (12) of the watering shell (4) by a holder (28) which has a layer (34) of heat-insulating material which covers the rear side of the heating plate (26) facing away from the bottom (12) of the watering shell (4).

6. The watering device according to Claim 5, **characterised in that** a level heating plate (26) is disposed along a level bottom area (14) of the watering shell (4).

7. The watering device according to any of Claims 1 to 6, **characterised in that** an electrically heatable heating plate (25, 26) is provided.

8. The watering device according to Claim 7, **characterised in that** a supply line (36) for delivering electrical energy to the heating plate (25, 26) is situated at the wall region (2, 22) of the watering shell (4) to which an inlet pipe (24) of the water supply device is connected.

9. The watering device according to Claim 8, **characterised in that** on the supply line (36) a line branch (38) is provided for supplying an additional heating element (40) for heating the inlet pipe (24).

10. The watering device according to Claim 9, **characterised in that** the additional heating element is formed by a heating line (40) that surrounds the inlet pipe (24) in windings.

## Revendications

1. Abreuvoir pour animaux d'élevage, comprenant au moins un bassin (4), un dispositif (16, 24) associé d'alimentation en eau et un dispositif (25, 26) de chauffage, pour empêcher l'eau se trouvant dans le bassin (4) de geler, le dispositif de chauffage ayant au moins une plaque (25, 26) chauffante, qui forme une surface chauffante pour la transmission de la chaleur à une surface (13, 14, 61) de transfert sur le bassin (4), **caractérisé en ce que** la surface de transfert est formée par une plaque (61) de support, mise à la partie (51) d'arrivée d'eau du dispositif (16) de robinet et coudée à partir de la partie (51) d'arrivée d'eau, de manière à s'étendre le long de la paroi d'une partie (2) de support du bassin (4) et à plonger dans l'eau du bassin (4).

2. Abreuvoir suivant la revendication 1, **caractérisé en ce que** le dispositif de chauffage a une plaque (25, 26) chauffante souple, dont la surface chauffante peut être adaptée au contour de la surface (13, 14, 61) de transfert se trouvant à la transmission de chaleur.

3. Abreuvoir suivant la revendication 2, **caractérisé en ce que** la plaque chauffante est adaptée, sous la forme d'une plaque (25) chauffante en silicone, à une partie de paroi extérieure voûtée de la partie (51) d'arrivée d'eau du dispositif (16) de robinet.

4. Abreuvoir suivant la revendication 3, **caractérisé en ce que** la plaque (25) chauffante est adaptée à la partie de paroi extérieure voûtée de l'extrémité du tuyau (24) d'arrivée, voisine de la partie (51) d'arrivée d'eau.

5. Abreuvoir suivant la revendication 1 ou 2, **caractérisé en ce que** la plaque (26) chauffante est fixée au fond du bassin (4) par une fixation (28), qui a une couche (34) en matériau de calorifugeage, qui recouvre le côté arrière de la plaque (26) chauffante, éloigné du fond (12) du bassin (4).

6. Abreuvoir suivant la revendication 5, **caractérisé en ce qu'**une plaque (26) chauffante plane est disposée le long d'une surface (14) de fond plane du bassin (4).

7. Abreuvoir suivant l'une des revendications 1 à 6, **caractérisé en ce qu'**il est prévu une plaque (25, 26) chauffante électrique.

8. Abreuvoir suivant la revendication 7, **caractérisé en ce qu'**une ligne (36) d'alimentation, pour apporter de l'énergie électrique à la plaque (25, 26) chauffante, est posée sur la partie (2, 22) de paroi du bassin (4), à laquelle un tuyau (24) d'arrivée du dispositif d'alimentation en eau est relié.

9. Abreuvoir suivant la revendication 8, **caractérisé en ce qu'**il est prévu, sur la ligne (36) d'alimentation, une dérivation (38) d'alimentation d'un élément (40) chauffant supplémentaire, pour chauffer le tuyau (24) d'arrivée.

10. Abreuvoir suivant la revendication 9, **caractérisé en ce que** l'élément chauffant supplémentaire est formé par une ligne (40) de chauffage entourant, en spires, le tuyau (24) d'arrivée.
